# EUROPÄISCHE PATENTSCHRIFT

(11) **EP 3 192 411 B1**
(45) Veröffentlichungstag und Bekanntmachung des Hinweises auf die Patenterteilung: **31.07.2019**
(21) Anmeldenummer: 16204913.4
(22) Anmeldetag: 19.12.2016
(51) Int. Cl.: A47J 31/60

(54) **GETRÄNKEAUTOMAT MIT REINIGUNGSVORRICHTUNG**
BEVERAGE MACHINE WITH CLEANING DEVICE
AUTOMATE DE PRÉPARATION DE BOISSONS COMPRENANT UN DISPOSITIF DE NETTOYAGE

(30) Priorität: 18.01.2016 DE 102016100719
(43) Veröffentlichungstag der Anmeldung: 19.07.2017
(73) Patentinhaber: Miele & Cie. KG, 33332 Gütersloh (DE)
(72) Erfinder: Tembaak, Jutta, 49492 Westerkappeln (DE); Last, Mario, 33739 Bielefeld (DE)

(56) Entgegenhaltungen:
- DE-A1-102011 081 010
- DE-A1-102013 106 148

## Beschreibung

Die Erfindung betrifft einen Getränkeautomat zur Zubereitung von Aufgussgetränken, mit einem Strömungsleitungssystem mit einer Ventilanordnung und einer Reinigungsvorrichtung zur Durchführung eines Reinigungs- und/oder Pflegevorgangs, umfassend eine Vorratskartusche zur Bevorratung von Reinigungsmittel, und eine elektrisch angetriebene Pumpe zur Zuführung des Reinigungsmittel oder einer Reinigungslösung von der Reinigungsvorrichtung in das Strömungsleitungssystem, ferner umfassend eine Steuereinrichtung zur Aktivierung und Deaktivierung der Ventilanordnung und der Pumpe zur Durchführung der Getränkezubereitung und des Reinigungs- oder Pflegevorgangs.

Ein Getränkeautomat mit einer Reinigungsvorrichtung ist beispielsweise aus der DE 10 2011 081 010 A1 bekannt. Hierbei ist in der Kartusche, die von der Geräteaußenseite her zugänglich ist, eine Pumpe integriert, die von einem geräteseitigen Antrieb angesteuert wird. Hierbei handelt es sich um eine Dosierpumpe, mit der eine vorbestimmte Menge an Reinigerkonzentrat aus der Kartusche in das Strömungsleitungssystem eingelassen wird. Nachteilig hierbei ist der recht aufwändige Aufbau, ferner muss eine mechanische Kupplung für die Übertragung der Motorkraft des Geräteinternen Motors auf die in der Kartusche befindlichen Pumpe bereitgestellt werden.

Der Erfindung liegt somit die Aufgabe zu Grunde, auf einfache Weise eine langlebige, zuverlässige, automatisch arbeitende Reinigungsvorrichtung bereitzustellen.

Erfindungsgemäß wird dieses Problem durch ein mit den Merkmalen des Patentanspruchs 1 und durch ein Verfahren gemäß Anspruch 9 gelöst. Vorteilhafte Ausgestaltungen und Weiterbildungen der Erfindung ergeben sich aus den jeweils abhängigen Ansprüchen.

Ein mit der Erfindung erreichbarer Vorteil besteht unter anderem darin, dass die Reinigungsvorrichtung eine eigenständige Wartung durchführt, ohne dass der Benutzer eingreifen muss. Ferner ist sichergestellt, dass Anbackungen / Anhaftungen oder Verstopfungen in Leitungen der Reinigungsvorrichtung selbst weitestgehend vermieden bzw. ganz verhindert werden. Dies wird auf einfache Weise dadurch erreicht, dass die Steuereinrichtung ferner dazu eingerichtet und programmiert ist, die Pumpe mit verschiedenen Pumpenleistungen zu aktivieren. Somit wird ein stoßweises Durchströmen der Fluidleitungen innerhalb der Reinigungsvorrichtung erreicht, wodurch Anhaftungen von Reiniger an den Innenseiten der Rohrwände angelöst werden oder aufgrund der verursachten Turbolenzen von vorneherein vermieden werden. Ferner wird durch das Beenden der Förderung von Reinigungsmittel oder Reinigungsfluid und dem danach aktiviertem Durchspülen der Düsen mit Wasser sichergestellt, dass Reste oder Spritzer von Reiniger sicher entfernt werden. Es ist somit sichergestellt, dass die mit Reiniger in Berührung kommenden Düsen oder Leitungen nicht verstopfen, wenn nach dem Reinigungszyklus länger inaktiv sind und dabei austrocknen.

In einer bevorzugen Weiterbildung umfasst der Getränkebereiter eine Motorsteuerung zur Bereitstellung der Stromzuführung zur Pumpe, die mit der Steuereinrichtung hinsichtlich Informationen der zugeführten elektrischen Leistung für die Pumpe in Verbindung steht, wobei die Antriebssteuerung dazu eingerichtet ist, der aufgrund dieser Informationen der Pumpe die entsprechende elektrische Leistung zuzuführen. Damit kann auf sichere Art und Weise die Zuführung der elektrischen Leistung oder Stromes zum Motor variiert werden.

In einer bevorzugten Weiterbildung ist die Motorsteuerung dazu eingerichtet, der Pumpe bzw. dem Pumpenmotor Wechselstrom mit einstellbarem Phasenanschnitt zuzuführen oder einzustellen. Dies ist mit einfachen, elektronischen Schaltern, wie TRIACS oder Thyristoren aufzubauen. Ferner kann ein bereits vorhandener Einphasen-Synchronmotor verwendet werden, der durch das Vorschalten einer solchen Motorsteuerung hinsichtlich seiner elektrischen Leistung und daraus folgernd seiner Pumpenleistung mit unterschiedlichen oder verschiedenen Werten betrieben werden kann.

In einer anderen, bevorzugten Weiterbildung umfasst die Antriebssteuerung einen Frequenzumrichter, der dazu eingerichtet und ausgebildet ist, den der Pumpe zugeführten Strom hinsichtlich der Frequenz und der bereitgestellten Leistung derart einzustellen, dass sich verschiedene, vorgegebene Pumpenleistungen ergeben oder einstellen. Damit können sehr genau und filigran Drehzahl und Lasteinstellungen vorgenommen werden. Ferner ist ein kurzzeitiger Überlastbetrieb möglich, sodass ein etwas unterdimensionierter, also kleinerer und kostengünstiger Pumpenmotor eingesetzt werden kann.

In einer weiteren, bevorzugten Ausführung ist die Antriebssteuerung dazu eingerichtet, der Pumpe bzw. dem Pumpenmotor einen puls-weiten-modulierten Strom zuzuführen, sodass sich verschiedene, vorgegebene Pumpenleistungen einstellen. Dies ist besonders sinnvoll, wenn die Stromversorgung des Geräts einen Gleichstrom bereits zur Verfügung stellt, sodass keine aufwändige, separate Stromversorgung für den Pumpenmotor mehr notwendig ist.

In einer insgesamt vorteilhaften Ausführung ist die Steuereinrichtung dazu eingerichtet, einen Reinigungsvorgang durchzuführen, bei dem die Antriebssteuerung derart gesteuert wird, dass sich eine Zuführung der elektrischen Leistung oder Stromes zur Pumpe gemäß einem vorgegebenen Profil hinsichtlich der Werte für den zugeführten elektrischen Leistung oder Strom einstellt. Somit können innerhalb der Reinigungsvorrichtung gezielt unterschiedliche Durchflussmengen in einem einzigen Reinigungszyklus bereitgestellt werden, wenn dies für die unterschiedlichen Schritte für die Durchführung des Reinigungszyklus sinnvoll ist.

In einer insgesamt zweckmäßigen Ausführung weist die Reinigungsvorrichtung eine durch die Pumpe betriebene Sprühvorrichtung zum Ansprühen und partiellem Auflösen von in dem Vorratsbehälter vorhandenem, in fester oder pastöser Form angeordnetem Pflegemittel auf. Das feste Mittel ist in der Regel länger haltbar, als flüssiges Mittel. Komplizierte Konservierungsmaßnahmen müssen hierbei nicht getroffen werden.

In einer vorteilhaften Weiterbildung umfasst die Reinigungsvorrichtung einen Mischbehälter, in den das durch Ansprühen aufgelöste Pflegemittel eintritt, wobei das Strömungsleitungssystem ferner eine mit der Steuereinrichtung in Verbindung stehende Ventilanordnung umfasst, die dazu ausgebildet ist, die als Reinigerlösung aufgelöste Pflegemittel in das Strömungsleitungssystem einzuleiten. Flüssige Reinigerlösung lässt sich einfach und sicher mittels einer Pumpe im Strömungsleitungssystem einleiten und zu den Problemzonen, wie Milchaufschäumer oder Milchleitungen führen. Dadurch, dass die Reinigungslösung individuell erzeugt wird, indem das in fester Form bevorratete Reinigungsmittel angesprüht wird, können Reinigerlösungen mit unterschiedlicher Konzentration automatisch bereitgestellt werden, je nach erwartetem Verschmutzungsgrad.

Die Erfindung betrifft ferner ein Verfahren zum Betreiben eines Getränkeautomaten mit einem Strömungsleitungssystem und einer Reinigungsvorrichtung, wie vorstehend beschrieben, aufweisend die Schritte
- Füllen des Mischbehälters mit einer vorgegebenen Menge Wasser;
- Ansprühen des bevorrateten Reinigers;
- Überführen des Reinigerfluids in das Strömungsleitungssystem bzw. zumindest bereichsweise in das Strömungsleitungssystem:
- Reinigung oder Spülen der Düse.

Gemäß einer insgesamt bevorzugten Ausführung des Getränkebereiters, wie vorstehend beschrieben, ist die Steuereinrichtung ferner dazu eingerichtet, das Strömungsleitungssystem gemäß dem oben genannten Verfahren zu betreiben.

Insgesamt beziehen sich alle Richtungsangaben und Positionsangaben auf die betriebsgemäße Aufstellposition des Getränkeautomaten bzw. Getränkebereiters.

Ein Ausführungsbeispiel der Erfindung ist in den Zeichnungen rein schematisch dargestellt und wird nachfolgend näher beschrieben. Es zeigen
- Fig. 1:: einen Heißgetränkebereiter in einer perspektivischen Frontansicht
- Fig. 2:: schematisch das Strömungsleitungssystem;
- Fig. 3, 4:: die Reinigungsvorrichtung in verschiedenen Betriebszuständen und
- Fig. 5:: ein Diagramm eines Reinigungszyklus in zeitlicher Abfolge.

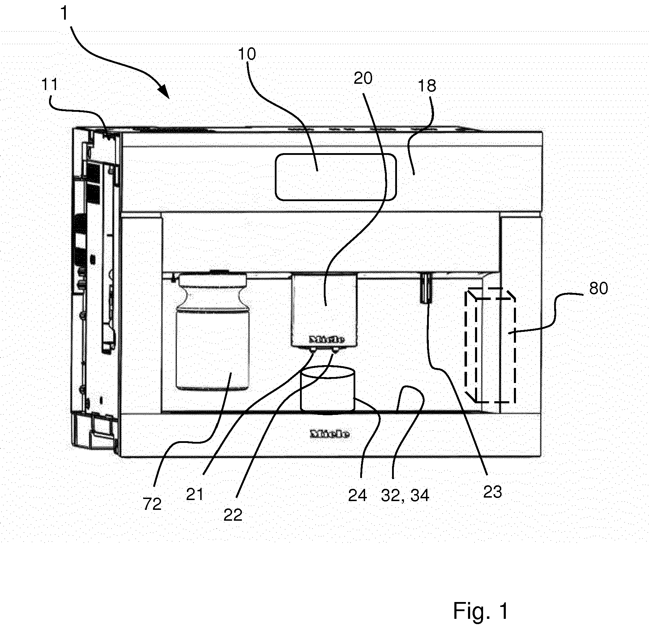

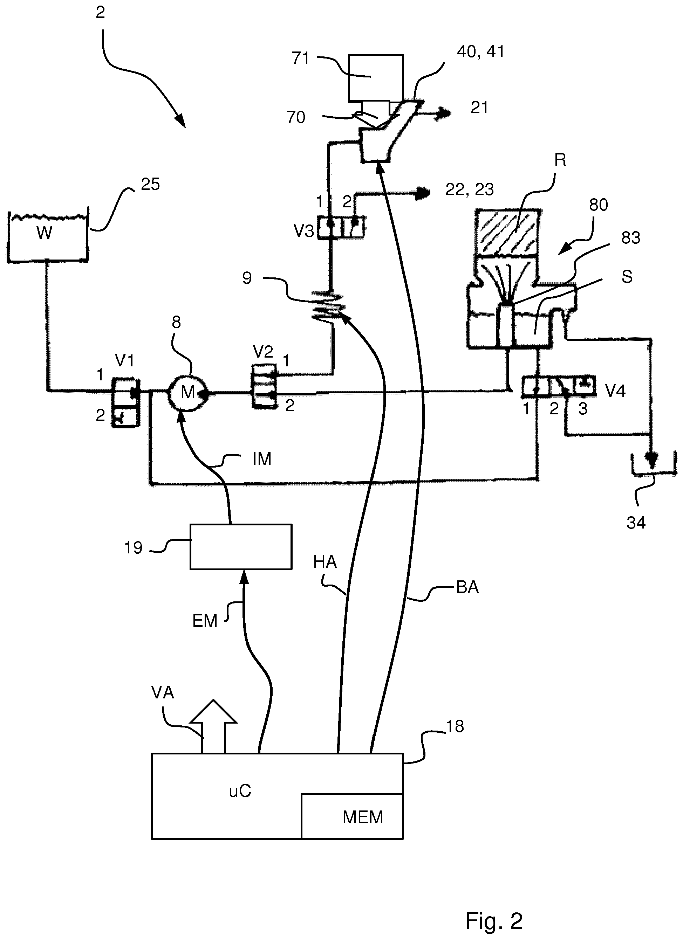

Die Fig.1 zeigt am Beispiel eines als Einbaugerät ausgebildeten Heißgetränkebereiter 1 mit allen relevanten Komponenten für die Zubereitung eines Heißgetränks. Der Getränkebereiter 1 umfasst unter anderem ein Gehäuse 11, in dem der Vorratsbehälter 71 für Kaffeebohnen mit darunter angebrachtem Mahlwerk 70 mit Motor, den Wasserbehälter 25 sowie die Möglichkeit, der Unterbringung des Strömungsleitungssystems 2 Ferner ist am Gerät 1 ein Vorratsbehälter 72 für Milch angeschlossen bzw. mit dem Strömungsleitungssystem 2 fluidtechnisch gekoppelt. Im Frontbereich des Heißgetränkebereiter 1 verfügt dieser über einen höhenbeweglichen Auslass 20, in dem mehrere Entnahmeeinrichtungen, hier Auslassdüsen 21, 22, untergebracht sind. Bei der Entnahmeeinrichtung 23 handelt es sich im vorliegenden Fall um eine Dampfdüse zur Abgabe heißen Wasserdampfes oder heißem Wasser, beispielsweise zur Verdünnung eines fertigen Kaffees oder zur Zubereitung eines Teegetränks. Die Entnahmeeinrichtung 21 stellt eine Ausgabeleitung oder Ausgabedüse 21 zur Abgabe von Kaffeegetränken dar. Eine Brüheinheit 40 mit einer Brühkammer 41 im Inneren des Gerätes 1 dient zur Zubereitung des Getränkes, wobei in die Brühkammer 41 das Kaffeepulver eingebracht und anschließend mit heißem Wasser durchflutet wird, sodass zur Ausgabeleitung und durch die Ausgabedüse 21 das fertige Kaffeegetränk ausgegeben wird. Bei dieser Ausführung sind die Ausgabedüsen 21, 22 in der Höhe verschiebbar angeordnet, so dass sie der Höhe eines auf der Abstellfläche oder Abtropfblech 32 abgestellten Trinkgefäßes 24 angepasst werden kann, ohne dass bei der Abgabe des Getränkes ein Verspritzen erfolgt. Das Abtropfblech 32 ist vorzugsweise mit Öffnungen und/oder Schlitzen versehen, um Flüssigkeitsreste in einer unterhalb des Abtropfbleches 32 vorhandenen Auffangschale 34 abzuführen. Ferner umfasst der Heißgetränkebereiter 1 einen Tresterbehälter oder Abfallbehälter, in den die aufgebrauchte Substanz, beispielsweise Kaffeekuchen, nach Vollendung der Getränkezubereitung hineingeworfen wird. Das Gerät 1 umfasst ferner eine Steuereinrichtung 18, die dazu eingerichtet ist, die einzelnen Funktionsbaugruppen, wie Pumpe 8, Ventile V1, V2, V3, V4 (Fig. 2), Heizeinrichtung 9 und Mahlwerk 70, soweit vorhanden, zu steuern, wie es für die Zubereitung des jeweils ausgewählten Getränkes notwendig ist. Die Steuereinrichtung 18 ist bevorzugt als Mikrocontroller uC mit einem zugeordneten Speicher MEM ausgeführt ist (Fig. 2), Der Heißgetränkebereiter 1 umfasst ferner eine Bedienvorrichtung 10, die in dem gezeigten Beispiel einen Berührbildschirm zur Eingabe von Bedienhandlungen umfasst. Die Bedienvorrichtung 10 wird von einem Mikrocontroller uC gesteuert, wobei in dem gezeigten Beispiel die Gerätesteuerung 18 bzw. der Mikrocontroller uC der Gerätesteuerung 18 auch für die Steuerung und Funktion der Bedienvorrichtung 10 ausgebildet und/oder programmiert ist. Die Vorratsbehälter 71, 25, 72 sind vorzugsweise jeweils mit einem Erfassungsmittel zur Erfassung der bevorrateten Menge der Zutat oder Zutaten versehen, die datentechnisch oder signaltechnisch mit der Steuereinrichtung 18 in Verbindung stehen.

Der Heißgetränkebereiter 1 umfasst ferner eine Reinigungsvorrichtung 80, in der Reinigungsmittel R bevorratet wird, welches gesteuert durch die Steuereinrichtung 18 in Zusammenwirken mit der Ventilanordnung in das Strömungsleitungssystem 2 zudosiert oder eingelassen wird. Insbesondere wird zyklisch oder aufgrund einer Benutzereingabe der Reiniger bzw. die Reinigerlösung S in die milchführenden Leitungen, die sich innerhalb des Gerätes 1 befinden, eingelassen.

Fig. 2 zeigt das Strömungsleitungssystem 2 mit den relevanten Funktionseinheiten und Aktoren zur Zubereitung von Heißgetränken. Im Zubereitungsbetrieb des Gerätes 1 wird Wasser W aus dem Vorratsbehälter 25 mittels der Pumpe 8 durch den Durchlauferhitzer 9 und mit Druck der Brühkammer 41 der Brüheinheit 40 zugeführt. In der Brühkammer befindet sich während der Aufbrühphase Kaffeemehl, durch das das erhitzte Wasser W mit Druck hindurchgedrückt wird. Dabei werden die löslichen Substanzen aus dem Kaffeemehl herausgelöst und als Getränk zur Entnahmeeinrichtung bzw. Düse 21 geführt und von dort aus in das Trinkgefäß 24 (Fig. 1) ausgegeben. Die Ventile sind dabei wie folgt geschaltet: V1 in Position 1, V2 in Position 1, V3 in Position 1 und V4 in Position 3 (gesperrt). Zum Bezug von Heißwasser oder zum Aktivieren des Milchaufschäumers (nicht gezeigt), wird das Ventil V3 in die Position 2 geschaltet, um Heißwasser oder Dampf dem Milchschäumer, beispielsweise ein Venturirohr, zuzuführen.

Die Pumpe 8 bzw. der Pumpenmotor M wird dabei mittels der Motorsteuerung 19 bestromt, wie es mit der Verbindungsleitung IM skizziert ist. Die Motorsteuerung 19 erhält die Eingangsinformationen EM zur Ansteuerung bzw. Bestromung des Motors M von der Gerätesteuerung 18.

Die Ansteuerung der Ventile V1, V2, V3, V4 erfolgt ebenfalls über die Informationsausgabe VA. Die Steuereinrichtung 18 steuert auch die Aktivierung des Heizkörpers 9 des Wassererhitzers, wie es mit der Signalleitung HA schematisch gezeigt ist. Die Steuereinrichtung 18 steuert auch die Aktivierung der Brüheinheit 40 bzw. die Verfahrbewegung der Brühkammer 41 an, wie es mit der Signalleitung BA schematisch gezeigt ist.

In Fig. 2 ist ferner gezeigt, dass das Strömungsleitungssystem 2 eine Reinigungsvorrichtung 80 umfasst bzw. diese im Strömungsleitungssystem 2 eingebunden ist. Gemäß der skizzierten Ausführung umfasst die Reinigungsvorrichtung 80 einen Vorratsbehälter 81 zur Bevorratung von Reinigungsmittel R in fester, gepresster Pulver- oder pastöser Form. Unterhalb des Vorratsbehälters 81 ist die Mischkammer 82 angeordnet, in die das abgelöste Reinigungsmittel R mit Wasser W vermischt und entsprechend zur Reinigerlösung S aufgelöst wird. Die Reinigerlösung S wird mittels einer Pumpe, in dem gezeigten Beispiel mit der für die Getränkezubereitung vorgesehenen Pumpe 8 in ausgesuchte Bereiche des Strömungsleitungssystems 2 gepumpt bzw. geführt. Die Einleitung erfolgt dabei unter Zuhilfenahme der entsprechenden Ansteuerung der Ventile V1, V2, V3, V4. Der Motor M der Pumpe 8 wird dabei mittels einer Motorsteuerung 19 bestromt, sodass die Pumpe 8 bzw. der Motor M in der Reinigungsphase mit unterschiedlichen Pumpenleistungen oder Durchflussgeschwindigkeiten betrieben wird.

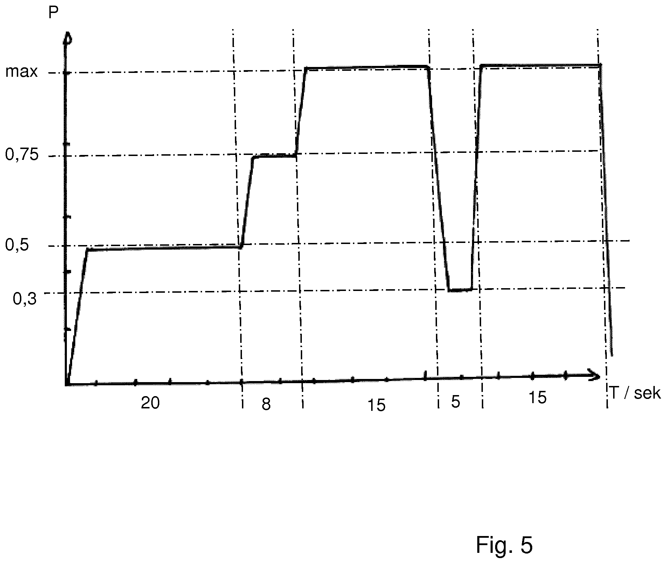

Der Reinigungsprozess oder die Reinigungsphase wird dabei in mehreren Schritten durchlaufen, die sich wie folgt abbilden lassen und in Fig. 5 als Diagramm verdeutlicht ist. Die Pumpenleistung P wird in den unterschiedlichen Schritten ebenfalls variiert. Als maximale Pumpenleistung Pmax wird ein Wert im Bereich von 200 bis 600 ml / min eingestellt oder vorgesehen.
Schritt 1, Füllen des Mischbehälters:
   Ventilstellung V1: 1, V2: 2, V3: 1, V4: 3,
   Pumpenleistung P ca. 0,5 Pmax,
   Dauer (ca.): T = 20 Sek.
Schritt 2, Ansprühen Reiniger:
   Ventilstellung V1: 2, V2: 2, V3: 1, V4: 1,
   Pumpenleistung P: ca., 0,75 Pmax
   Dauer (ca.): T= 8 Sek.
Schritt 3 Reinigerüberführung ins Fluidsystem
   Ventilstellung V1:2, V2: 1, V3: 1, V4: 1
   Pumpenleistung P: Pmax
   Dauer (ca.): T = 15 Sek.
Schritt 4 Düsenreinigung
   Ventilstellung V1:1 V2:2 V3:1 V4: 3 (oder 1)
   Pumpenleistung P: 0,3 Pmax
   Dauer (ca.): T=5 Sek.
Schritt 5 (optional) Restreinigerüberführung ins Fluidsystem
   Ventilstellung V1: 2, V2: 1, V3: 1, V4: 1
   Pumpenleistung P: Pmax
   Dauer (ca.): T=15 Sek.

Bei der Düsenreinigung (Schritt 4) kann das Ventil V4 auf 3 stehen oder auf 1. Wenn es auf 1 steht, folgt Schritt 5, ansonsten ist der gesamte Reinigungsprozess abgeschlossen.

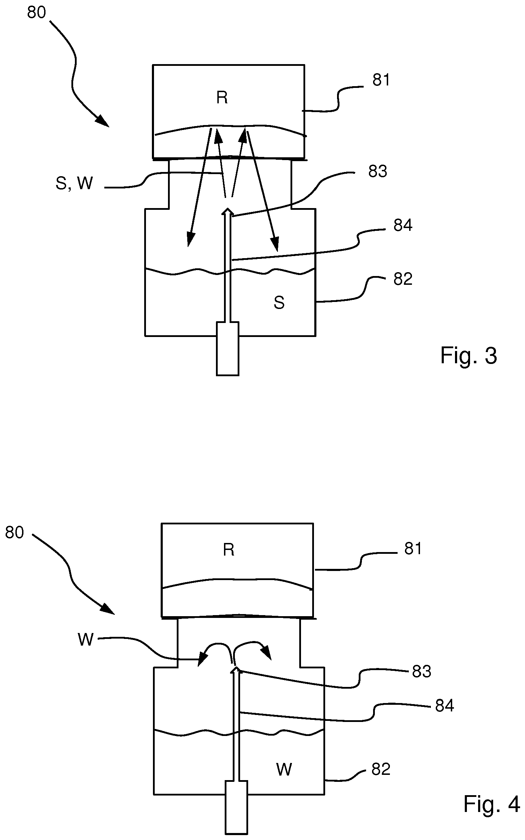

Fig. 3 zeigt schematisch die Reinigungsvorrichtung 80, wie sie mit voller Pumpenleistung Pmax betrieben wird. Das Wasser W oder die Lösung S wird dabei mit einem Fluiddruck im Bereich von1 bis 5 Bar in das Düsenrohr 84 eingelassen, wobei es durch die Düse 83 nach oben gegen das feste Reinigungsmittel R gespritzt wird. Dabei wird Schicht für Schicht Reiniger R abgetragen solange Wasser W oder Fluid S gegen die Oberfläche des Vorrats R spritzt. Der Reiniger R gelangt dann gemeinsam mit dem Wasser W in die Mischkammer 82. Das "Anspritzen" des Reinigervorrats R wird so lange durchgeführt, bis die Reinigerlösung S die vorgegebene Reinigerkonzentration aufweist. Um komplizierte Messsensorik zu vermeiden, erfolgt dies aufgrund einer vorgegeben Zeit, in dem Beispiel im Bereich von 4 bis 20 Sekunden, vorzugsweise 8 Sekunden.

Um die Düse 83 von Reinigerresten zu befreien, ist es vorgesehen, dass nach Abschluss des Ansprühens oder nach der Durchführung des Reinigungszyklus durch die Düse Wasser W mit vermindertem Druck durchgepumpt wird (Fig. 4). Hierbei wird die Pumpe P bzw. der Pumpenmotor M mit verminderter Leistung betrieben, vorzugsweise im Bereich von 0,2 bis 0,5 - fache der maximalen Pumpenleistung Pmax. Als maximale Pumpenleistung ist dabei eine Pumpenleistung Pmax mit einem Wert im Bereich zwischen 300 ml/min bis 800 ml/min, vorzugsweise im Bereich von 500 ml/min bis 700 ml/min vorgesehen. Der verminderte Druck bewirkt, dass Wasser zwar durch die Düse 83 hindurch gepresst wird, jedoch erreicht die aus der Düse 83 austretende Fontäne nicht die untere Fläche des Reinigerblocks R im Vorratsbehälter 81. Dies ist auch während des Spülvorgangs notwendig, da in dieser Phase Reinigerreste an der Düse 83 beseitigt werden sollen und kein weiteres Reinigungsmittel R in den Bereich der Düse 83 gelangen darf.

## Patentansprüche

1. Getränkeautomat (1) zur Zubereitung von Aufgussgetränken, mit einem Strömungsleitungssystem (2) mit einer Ventilanordnung (V1, V2, V3, V4) und einer Reinigungsvorrichtung (80) zur Durchführung eines Reinigungs- und/oder Pflegevorgangs, umfassend eine Vorratskartusche (81) zur Bevorratung von Reinigungsmittel (R), und eine elektrisch angetriebene Pumpe (8, M) zur Zuführung des Reinigungsmittel (R) oder einer Reinigungslösung (S) von der Reinigungsvorrichtung (80) in das Strömungsleitungssystem (2), ferner umfassend eine Steuereinrichtung (18) zur Aktivierung und Deaktivierung der Ventilanordnung (V1, V2, V3, V4) und der Pumpe (8, M) zur Durchführung der Getränkezubereitung und des Reinigungs- oder Pflegevorgangs,
**dadurch gekennzeichnet,**
**dass** die Steuereinrichtung (18) ferner dazu eingerichtet und programmiert ist, während der Reinigungsphase die Pumpe (8, M) mit verschiedenen Pumpenleistungen (Pmax, P) zu aktivieren, um ein stoßweises Durchströmen der Fluidleitungen innerhalb der Reinigungsvorrichtung (80) zu bewirken.

2. Getränkeautomat nach Anspruch 1,
**gekennzeichnet durch**
eine Motorsteuerung (19) zur Bereitstellung der Stromzuführung zur Pumpe (8, M), die mit der Steuereinrichtung (18) hinsichtlich Informationen (EM) der zugeführten elektrischen Leistung für die Pumpe (8, M) in Verbindung steht, wobei die Antriebssteuerung (19) dazu eingerichtet ist, der aufgrund dieser Informationen (EM) der Pumpe (8, M) die entsprechende elektrische Leitung (Pmax, P) zuzuführen.

3. Getränkeautomat nach Anspruch 2,
**dadurch gekennzeichnet,**
**dass** die Motorsteuerung (19) dazu eingerichtet ist, der Pumpe (8, M) Wechselstrom mit einstellbarem Phasenanschnitt zuzuführen oder einzustellen.

4. Getränkeautomat nach Anspruch 2,
**dadurch gekennzeichnet,**
**dass** die Antriebssteuerung (19) einen Frequenzumrichter umfasst, der dazu eingerichtet und ausgebildet ist, den der Pumpe (8, M) zugeführten Strom hinsichtlich der Frequenz und der bereitgestellten Leistung derart einzustellen, dass sich verschiedene, vorgegebene Pumpenleistungen (Pmax, P) ergeben oder einstellen.

5. Getränkeautomat nach Anspruch 2,
**dadurch gekennzeichnet,**
**dass** die Antriebssteuerung (19) dazu eingerichtet ist, der Pumpe (8, M) eine puls-weiten-modulierten Strom zuzuführen, sodass sich verschiedene, vorgegebene Pumpenleistungen (Pmax, P) einstellen.

6. Getränkeautomat nach einem der Ansprüche 2 bis 5,
**dadurch gekennzeichnet,**
**dass** die Steuereinrichtung (18) dazu eingerichtet ist, einen Reinigungsvorgang durchzuführen, bei dem die Antriebssteuerung (19) derart gesteuert wird, dass sich eine Zuführung der elektrischen Leistung (Pmax, P) oder Stromes zur Pumpe gemäß einem vorgegebenen Profil hinsichtlich der Werte für den zugeführten elektrischen Leistung oder Strom einstellt.

7. Getränkeautomat nach einem der Ansprüche 2 bis 6,
**dadurch gekennzeichnet,**
**dass** die Reinigungsvorrichtung (80) eine durch die Pumpe (8, M) betriebene Sprühvorrichtung (83, 84) zum Ansprühen und partiellem Auflösen von in dem Vorratsbehälter (81) vorhandenen, in fester oder pastöser Form angeordnetem Pflegemittel bzw. Reinigungsmittel (R) aufweist.

8. Getränkeautomat nach Anspruch 7,
**dadurch gekennzeichnet,**
**dass** die Reinigungsvorrichtung (80) einen Mischbehälter (82) umfasst, in den das durch Ansprühen aufgelöste Pflegemittel (R) eintritt, wobei das Strömungsleitungssystem (2) ferner eine mit der Steuereinrichtung (18) in Verbindung stehende Ventilanordnung (V1, V2, V3, V4) umfasst, die dazu ausgebildet ist, das als Reinigerlösung (S) aufgelöste Pflegemittel (R) in das Strömungsleitungssystem (2) einzuleiten.

9. Verfahren zum Betreiben eines Getränkeautomaten (1) mit einem Strömungsleitungssystem (2) und einer Reinigungsvorrichtung (80), gemäß einem der Ansprüche 1 bis 8,
**gekennzeichnet durch** die Schritte
- Füllen des Mischbehälters (82) mit einer vorgegebenen Menge Wasser (W);
- Ansprühen des bevorrateten Reinigers (R);
- Überführen des Reinigerfluids (S) in das Strömungsleitungssystem bzw. zumindest bereichsweise in das Strömungsleitungssystem (2):
- Reinigung oder Spülen der Düse (83).

10. Verfahren zum Betreiben eines Getränkeautomaten (1) nach Anspruch 9,
**dadurch gekennzeichnet,**
**dass** im Schritt - Ansprühen der bevorrateten Reinigers (R) - die Pumpe mit einer Leistung betrieben wird, die niedriger ist, als die maximale Leistung.

11. Verfahren zum Betreiben eines Getränkeautomaten (1) nach Anspruch 9,
**dadurch gekennzeichnet,**
**dass** in den Schritten - Füllen des Mischbehälters - und/oder - Reinigen der Düse - mit einer Leistung (P), die niedriger ist, als die maximale Leistung (Pmax).

12. Verfahren zum Betreiben eines Getränkeautomaten (1) nach Anspruch 9,
**dadurch gekennzeichnet,**
**dass** im Schritt - Überführen des Reinigerfluids (S) in das Strömungsleitungssystem - die Pumpe (8, M) mit der maximalen Pumpenleitung (Pmax) betrieben wird.

13. Verfahren zum Betreiben eines Getränkeautomaten (1) nach einem der Ansprüche 10 bis 12,
**dadurch gekennzeichnet,**
**dass** die maximale Pumpenleistung (Pmax) oder Durchflussleitung einen Wert im Bereich von 300 ml/min bis 800 ml/min, bevorzugt im Bereich von 500 ml/min bis 700 ml/min aufweist,

14. Verfahren zum Betreiben eines Getränkeautomaten (1) nach Anspruch 12,
**dadurch gekennzeichnet,**
**dass** die niedrigere Pumpenleistung (P) für den Schritt - Füllen des Mischbehälters - zumindest nahezu das 0,5-fache der maximalen Pumpenleistung (Pmax) beträgt und/oder die niedrigere Pumpenleistung (P) für den Schritt - Ansprühen des bevorrateten Reinigers (R) - zumindest nahezu das 0,75-fache der maximalen Pumpenleistung (Pmax) beträgt und/oder die niedrigere Pumpenleistung (P) für den Schritt - Reinigung oder Spülen der Düse - zumindest nahezu das 0,3 - fache der maximalen Pumpenleistung (Pmax) beträgt.

15. Getränkeautomat nach einem der Ansprüche 1 bis 8,
**dadurch gekennzeichnet,**
**dass** die Steuereinrichtung (18, uC) dazu eingerichtet ist, einen Reinigungsvorgang gemäß dem Verfahren nach einem der Ansprüche 9 bis 13 durchzuführen, bei dem die Antriebssteuerung (19) derart gesteuert wird, dass sich eine Zuführung der elektrischen Leistung (Pmax, P) oder Stromes zur Pumpe (P, M) gemäß einem vorgegebenen Profil hinsichtlich der Werte für den zugeführten elektrischen Leistung oder Strom einstellt.

## Claims

1. Drinks machine (1) for preparing infusion drinks, comprising a flow line system (2) that has a valve arrangement (V1, V2, V3, V4) and a cleaning apparatus (80) for carrying out a cleaning and/or care process, comprising a storage cartridge (81) for storing cleaning agent (R), and an electrically driven pump (8, M) for supplying the cleaning agent (R) or a cleaning solution (S) from the cleaning apparatus (80) into the flow line system (2), further comprising a control device (18) for activating and deactivating the valve arrangement (V1, V2, V3, V4) and the pump (8, M) for carrying out the drink preparation and the cleaning or care process,
**characterised in that** the control device (18) is further configured and programmed to activate the pump (8, M) at different pump powers (Pmax, P) during the cleaning phase to cause pulsating flow through the fluid lines within the cleaning apparatus (80).

2. Drinks machine according to claim 1, **characterised by** a motor controller (19) for providing the current supply to the pump (8, M), which motor controller is in communication with the control device (18) with respect to information (EM) regarding the supplied electric power for the pump (8, M), the drive controller (19) being configured to supply the corresponding electric power (Pmax, P) to the pump (8, M) on the basis of this information (EM).

3. Drinks machine according to claim 2, **characterised in that** the motor controller (19) is configured to supply the pump (8, M) with alternating current having adjustable phase control or to adjust said current.

4. Drinks machine according to claim 2, **characterised in that** the drive controller (19) comprises a frequency converter which is configured and designed to adjust the current supplied to the pump (8, M) in terms of frequency and the power provided such that different predetermined pump powers (Pmax, P) are produced or adjusted.

5. Drinks machine according to claim 2, **characterised in that** the drive controller (19) is configured to supply the pump (8, M) with a pulse width modulated current, so that different predetermined pump powers (Pmax, P) are adjusted.

6. Drinks machine according to any of claims 2 to 5, **characterised in that** the control device (18) is configured to carry out a cleaning process during which the drive controller (19) is controlled such that a supply of electric power (Pmax, P) or current to the pump is adjusted according to a predetermined profile with respect to the values of the supplied electric power or current.

7. Drinks machine according to any of claims 2 to 6, **characterised in that** the cleaning apparatus (80) has a spraying apparatus (83, 84) operated by the pump (8, M) for spraying and partially dissolving a care product or cleaning agent (R) present in the storage container (81) in a solid or pasty form.

8. Drinks machine according to claim 7, **characterised in that** the cleaning apparatus (80) comprises a mixing container (82) into which the care product (R) dissolved by the spraying enters, the flow line system (2) further comprising a valve arrangement (V1, V2, V3, V4) which is in communication with the control device (18) and is designed to introduce the care product (R), dissolved as the cleaning solution (S), into the flow line system (2).

9. Method for operating a drinks machine (1) comprising a flow line system (2) and a cleaning apparatus (80), according to any of claims 1 to 8, **characterised by** the steps of:
- filling the mixing container (82) with a predetermined amount of water (W);
- spraying the stored cleaner (R);
- transferring the cleaning fluid (S) into the flow line system or at least in regions into the flow line system (2);
- cleaning or rinsing the nozzle (83).

10. Method for operating a drinks machine (1) according to claim 9, **characterised in that**, in the step of spraying the stored cleaner (R), the pump is operated at a power that is lower than the maximum power.

11. Method for operating a drinks machine (1) according to claim 9, **characterised in that**, in the steps of filling the mixing container and/or cleaning the nozzle, at a power (P) that is lower than the maximum power (Pmax).

12. Method for operating a drinks machine (1) according to claim 9, **characterised in that**, in the step of transferring the cleaning fluid (S) into the flow line system, the pump (8, M) is operated at the maximum pump power (Pmax).

13. Method for operating a drinks machine (1) according to any of claims 10 to 12, **characterised in that** the maximum pump power (Pmax) or flow rate has a value in the range of from 300 ml/min to 800 ml/min, preferably in the range of from 500 ml/min to 700 ml/min.

14. Method for operating a drinks machine (1) according to claim 12, **characterised in that** the lower pump power (P) for the step of filling the mixing container is at least nearly 0.5 times the maximum pump power (Pmax) and/or the lower pump power (P) for the step of spraying the stored cleaner (R) is at least nearly 0.75 times the maximum pump power (Pmax) and/or the lower pump power (P) for the step of cleaning or rinsing the nozzle is at least nearly 0.3 times the maximum pump power (Pmax).

15. Drinks machine according to any of claims 1 to 8, **characterised in that** the control device (18, uC) is configured to carry out a cleaning process using the method according to any of claims 9 to 13, during which the drive controller (19) is controlled such that a supply of electric power (Pmax, P) or current to the pump (P, M) is adjusted according to a predetermined profile in terms of the values of the supplied electric power or current.

## Revendications

1. Distributeur automatique de boissons (1) pour la préparation de boissons obtenues par infusion, comprenant un système de conduite d'écoulement (2) comportant un ensemble soupape (V1, V2, V3, V4) et un dispositif de nettoyage (80) permettant la réalisation du processus de nettoyage et/ou d'entretien, comprenant une cartouche de stockage (81) pour le stockage du produit nettoyant (R) et une pompe (8, M) à entraînement électrique pour l'amenée du produit nettoyant (R) ou une solution de nettoyage (S) du dispositif de nettoyage (80) au système de conduite d'écoulement (2), comprenant en outre un dispositif de commande (18) permettant l'activation et la désactivation de l'ensemble soupape (V1, V2, V3, V4) et de la pompe (8, M) pour la réalisation de la préparation de la boisson et du processus de nettoyage/d'entretien,
**caractérisé en ce que** le dispositif de commande (18) est en outre configuré et programmé pour activer, pendant la phase de nettoyage, la pompe (8, M) à différentes puissances de pompage (Pmax, P) pour permettre un écoulement intermittent à travers les conduites de fluide à l'intérieur du dispositif de nettoyage (80).

2. Distributeur automatique de boissons selon la revendication 1, **caractérisé par** une commande de moteur (19) pour la fourniture de l'alimentation électrique à la pompe (8, M), laquelle commande est reliée au dispositif de commande (18) en ce qui concerne les informations (EM) relatives à l'énergie électrique fournie à la pompe (8, M), la commande d'entraînement (19) étant configurée pour fournir l'énergie électrique correspondante (Pmax, P) à la pompe (8, M) sur la base de ces informations (EM).

3. Distributeur automatique de boissons selon la revendication 2, **caractérisé en ce que** la commande de moteur (19) est configurée pour fournir à la pompe un courant alternatif présentant une section de phase réglable (8, M), ou pour régler celui-ci.

4. Distributeur automatique de boissons selon la revendication 2, **caractérisé en ce que** la commande d'entraînement (19) comprend un convertisseur de fréquence configuré et conçu pour régler le courant fourni à la pompe (8, M) en ce qui concerne la fréquence, et pour régler la l'énergie fournie, de telle sorte qu'il en résulte différentes puissances de pompage (Pmax, P) prédéterminées, ou que celles-ci soient réglées.

5. Distributeur automatique de boissons selon la revendication 2, **caractérisé en ce que** la commande d'entraînement (19) est configurée pour fournir à la pompe (8, M) un courant modulé en largeur d'impulsion de telle sorte que différentes puissances de pompage (Pmax, P) prédéterminées soient réglées.

6. Distributeur automatique de boissons selon l'une des revendications 2 à 5, **caractérisé en ce que** le dispositif de commande (18) est configuré pour réaliser un processus de nettoyage dans lequel la commande d'entraînement (19) est commandée de telle sorte que l'alimentation de la pompe en énergie électrique (Pmax, P) ou en courant soit réglée selon un profil prédéterminé en ce qui concerne les valeurs pour l'énergie électrique ou le courant fourni(e).

7. Distributeur automatique de boissons selon l'une des revendications 2 à 6, **caractérisé en ce que** le dispositif de nettoyage (80) comporte un dispositif de pulvérisation (83, 84) actionné par la pompe (8, M) pour pulvériser et dissoudre partiellement des produits d'entretien ou de nettoyage (R) présents dans le réservoir (81) sous forme solide ou pâteuse.

8. Distributeur automatique de boissons selon la revendication 7, **caractérisé en ce que** le dispositif de nettoyage (80) comprend un réservoir de mélange (82) dans lequel le produit d'entretien (R) dissous par pulvérisation entre, le système de conduite d'écoulement (2) comprenant en outre un ensemble soupape (V1, V2, V3, V4) qui communique avec le dispositif de commande (18) et est conçu pour introduire le produit d'entretien (R) dissous comme solution de nettoyage (S) dans le système de conduite d'écoulement (2).

9. Procédé pour faire fonctionner un distributeur automatique de boissons (1) comportant un système de conduite d'écoulement (2) et un dispositif de nettoyage (80), selon l'une des revendications 1 à 8, **caractérisé par** les étapes suivantes :
- remplissage du réservoir de mélange (82) d'une quantité d'eau donnée (W) ;
- pulvérisation du nettoyant stocké (R) ;
- transfert du liquide de nettoyage (S) dans le système de conduite d'écoulement ou au moins partiellement dans le système de conduite d'écoulement (2) ;
- nettoyage ou rinçage de la buse (83).

10. Procédé pour faire fonctionner un distributeur automatique de boissons (1) selon la revendication 9, **caractérisé en ce que**, à l'étape de pulvérisation du nettoyant stocké (R), la pompe est actionnée avec une puissance inférieure à la puissance maximale.

11. Procédé pour faire fonctionner un distributeur automatique de boissons (1) selon la revendication 9, **caractérisé en ce que**, aux étapes de remplissage du réservoir de mélange et/ou de nettoyage de la buse, la puissance (P) appliquée est inférieure à la puissance maximale (Pmax).

12. Procédé pour faire fonctionner un distributeur automatique de boissons (1) selon la revendication 9, **caractérisé en ce que**, à l'étape de transfert du liquide de nettoyage (S) dans le système de conduite d'écoulement, la pompe (8, M) est actionnée avec la puissance de pompage maximale (Pmax).

13. Procédé pour faire fonctionner un distributeur automatique de boissons (1) selon l'une des revendications 10 à 12, **caractérisé en ce que** la puissance de pompage maximale (Pmax) ou le débit d'écoulement correspond à une valeur comprise entre 300 et 800 ml/min, de préférence entre 500 et 700 ml/min.

14. Procédé pour faire fonctionner un distributeur de boissons (1) selon la revendication 12, **caractérisé en ce que** la puissance de pompage inférieure (P) pour l'étape de remplissage du réservoir de mélange est au moins approximativement 0,5 fois la puissance de pompage maximale (Pmax) et/ou **en ce que** la puissance de pompage inférieure (P) pour l'étape de pulvérisation du nettoyant stocké (R) est au moins approximativement 0,75 fois la puissance de pompage maximale (Pmax) et/ou **en ce que** la puissance de pompage inférieure (P) pour l'étape de nettoyage ou de rinçage la buse est au moins approximativement 0,3 fois la puissance de pompage maximale (Pmax).

15. Distributeur automatique de boissons selon l'une des revendications 1 à 8, **caractérisé en ce que** le dispositif de commande (18, uC) est configuré pour réaliser un processus de nettoyage conformément au procédé selon l'une des revendications 9 à 13, dans lequel la commande d'entraînement (19) est commandée de telle sorte qu'une alimentation de la pompe en énergie électrique (Pmax, P) ou en courant (P, M) soit réglée selon un profil prédéterminé en ce qui concerne les valeurs relatives à l'énergie électrique ou le courant fourni(e).
